# DEMANDE DE BREVET EUROPEEN

(11) **EP 4 085 756 A1**
(43) Date de publication de la demande: **09.11.2022**
(21) Numéro de dépôt: 22305639.1
(22) Date de dépôt: 29.04.2022
(51) Int. Cl.: A01G 27/00, A01G 27/02

(54) **DISPOSITIF DE DISTRIBUTION AUTOMATIQUE D' EAU POUR POTS DE FLEURS ET JARDINIÈRES**

(30) Priorité: 03.05.2021 FR 2104606
(71) Demandeur: Serial Engineering, 45650 Saint-Jean-le-Blanc (FR)
(72) Inventeur: MORIN, Marcel, 45650 SAINT JEAN LE BLANC (FR); MORIN, Christian, 45380 LA CHAPELLE SAINT MESMIN (FR); MORIN, Sophie, 45430 CHECY (FR)
(74) Mandataire: Casalonga

(57) **Abrégé**

Dispositif de distribution automatique d'eau pour pots de fleurs et jardinières, comprenant :
un corps principal (2) comportant une cavité (3) délimitée par un fond (4), une paroi supérieure (5) et au moins une paroi latérale (6) ;
une arrivée d'eau (7) ménagée dans la paroi supérieure (5) du corps principal (2) pour l'admission d'eau dans la cavité (3) ;
un orifice d'évacuation d'eau (8) ménagé dans la paroi latérale (6) du corps principal (2) pour l'évacuation de l'eau de la cavité (3) vers l'extérieur du corps principal (2) ;
un orifice d'évacuation d'air (9) ménagé dans le corps principal (2) pour l'évacuation d'air vers l'extérieur de la cavité (3) ; et
un élément mobile (10) apte à se déplacer, sous l'action de l'eau admise dans la cavité (3), d'une première position dans laquelle l'arrivée d'eau (7) est dégagée pour l'admission d'eau dans la cavité (3) vers une deuxième position dans laquelle l'élément mobile (10) obture l'arrivée d'eau (7).

## Description

La présente invention se rapporte, de manière générale, à l'arrosage de plantes disposées dans un pot de fleurs ou une jardinière. En particulier, l'invention concerne un dispositif de distribution d'eau pour pots de fleurs et jardinières et, plus précisément, un dispositif de distribution automatique d'eau pour pots de fleurs et jardinières.

L'invention concerne également un système de distribution automatique d'eau comprenant un dispositif de distribution automatique d'eau.

La plupart des plantes nécessitent un arrosage régulier et, en cas d'absence, l'arrosage peut devenir problématique.

Des dispositifs d'arrosage automatique connus consistent, par exemple, à installer une réserve d'eau au contact direct de la terre qui est contenue dans le pot de fleurs, ou encore à connecter la réserve d'eau au pot de fleurs via un tuyau souple. Dans le second cas de figure, une première extrémité est enfoncée dans la terre et une deuxième extrémité est plongée dans la réserve d'eau.

Cependant, ces dispositifs sont peu esthétiques et humidifient la terre en continue sans tenir compte des besoins réels en eau de la plante. Ceci conduit à un arrosage inadapté et souvent excessif, ce qui est nuisible pour la santé de la plante.

De plus, la quantité d'eau disponible dans la réserve d'eau est généralement limitée et leur utilisation n'est convenable que pour des périodes d'arrosage autonome très courtes.

Dans certaines conditions, les plantes nécessitent au contraire un arrosage automatique sur une période prolongée comme, par exemple, dans le cas où les pots de fleurs ou les jardinières sont disposées dans un cimetière dans lequel il n'est pas toujours possible de se rendre régulièrement.

D'autres dispositifs connus sont des dispositifs connectés et permettent de programmer le temps et la durée d'arrosage de pots de fleurs ou jardinières.

Cependant, de tels dispositifs sont complexes et coûteux.

De plus, ils nécessitent l'installation d'un programmateur sur une arrivée d'eau, ce qui n'est généralement pas possible dans un cimetière dans lequel il est, au contraire, préférable que le dispositif d'arrosage fonctionne de manière indépendante.

Pour les raisons évoquées ci-dessus, l'invention concerne un dispositif de distribution d'eau simple et peu coûteux, fonctionnant de manière automatique et distribuant l'eau de façon adaptée aux besoins en eau de la plante.

Il est donc proposé un dispositif de distribution automatique d'eau pour jardinières et pots de fleurs, comprenant : un corps principal comportant une cavité délimitée par un fond, une paroi supérieure et au moins une paroi latérale ; une arrivée d'eau ménagée dans la paroi supérieure du corps principal pour l'admission d'eau dans la cavité ; un orifice d'évacuation d'eau ménagé dans la paroi latérale du corps principal pour l'évacuation de l'eau de la cavité vers l'extérieur du corps principal ; un orifice d'évacuation d'air ménagé dans le corps principal pour l'évacuation d'air vers l'extérieur de la cavité ; et un élément mobile apte à se déplacer, sous l'action de l'eau admise dans la cavité, d'une première position dans laquelle l'arrivée d'eau est dégagée pour l'admission d'eau dans la cavité vers une deuxième position dans laquelle l'élément mobile obture l'arrivée d'eau.

De préférence, l'élément mobile est apte à se déplacer entre les première et deuxième positions par translation rectiligne le long d'un axe de déplacement, l'arrivée d'eau étant positionnée sur ledit axe de déplacement.

Avantageusement, le corps principal peut comprendre des moyens de guidage de l'élément mobile entre les première et deuxième positions.

Selon un mode de réalisation, le dispositif de distribution automatique d'eau peut comprendre un corps secondaire en communication fluidique avec le corps principal par l'intermédiaire de l'orifice d'évacuation d'eau du corps principal, le corps secondaire comportant en outre une ouverture pour le passage de l'eau vers l'extérieur et un filtre perméable à l'eau et apte à s'opposer au développement de racines au travers de ladite ouverture.

De manière avantageuse, le dispositif de distribution automatique d'eau peut comprendre une jauge de niveau d'eau en communication fluidique avec le corps principal par l'intermédiaire de l'orifice d'évacuation d'air.

De plus, le corps principal peut comprendre un joint disposé entre l'élément mobile et l'arrivée d'eau.

L'invention concerne également un système de distribution automatique d'eau comprenant : au moins un pot de fleurs ou une jardinière ; un dispositif de distribution d'eau comme décrit précédemment, disposé dans le pot de fleurs ou la jardinière ; un réservoir d'eau ; et un conduit d'alimentation reliant le réservoir d'eau à l'arrivée d'eau du dispositif de distribution d'eau.

Selon une caractéristique, le système peut comprendre une pluralité de pot de fleurs et/ou de jardinière comprenant chacun un dispositif de distribution automatique d'eau comme décrit précédemment, le conduit d'alimentation reliant le réservoir d'eau à chacun desdits dispositifs de distribution d'eau.

Selon un mode de réalisation, le réservoir d'eau peut être fixé à un réceptacle apte à recevoir les pots de fleurs et/ou jardinières, le réservoir d'eau étant disposé à une hauteur supérieure par rapport aux dispositifs de distribution d'eau.

De préférence, le système comprend des moyens de limitation de l'évaporation de l'eau distribuée par le dispositif de distribution d'eau dans le pot ou la jardinière.

Avantageusement, les moyens de limitation de l'évaporation de l'eau peuvent comprendre une plaque perforée.

D'autres buts, avantages et caractéristiques ressortiront de la description qui va suivre, donnée à titre purement illustratif et faite en référence aux dessins annexés sur lesquels :
[Fig 1] représente une vue de côté d'un dispositif de distribution automatique d'eau selon un mode de réalisation de l'invention.
[Fig 2] représente une vue de dessus du dispositif de distribution automatique d'eau illustré à la figure 1.
[Fig 3] est une vue en coupe du dispositif de distribution automatique d'eau selon un plan III-III visible à la figure 2, le dispositif comportant un élément mobile illustré dans une première position.
[Fig 4] est une vue en coupe du dispositif de distribution automatique d'eau 1 selon un plan IV-IV visible à la figure 2, passant par une jauge de niveau d'eau.
[Fig 5] est une vue en coupe du dispositif de distribution d'eau selon un plan III-III visible à la figure 2, le dispositif comportant un élément mobile illustré dans une deuxième position.
[Fig 6] illustre un système de distribution automatique d'eau comprenant un dispositif de distribution d'eau selon la figure 1 disposé dans un pot de fleurs.
[Fig 7] représente le système de distribution automatique d'eau de la figure 6 comportant en outre un moyen de limitation de l'évaporation de l'eau selon un premier mode de réalisation.
[Fig 8] illustre un système de distribution automatique d'eau comprenant un dispositif de distribution d'eau selon la figure 1 disposé dans une jardinière ainsi qu'un moyen de limitation de l'évaporation de l'eau selon un deuxième mode de réalisation.
[Fig 9] illustre un système de distribution automatique d'eau comprenant une pluralité de dispositif de distribution automatique d'eau.
[Fig 10] illustre une vue de côté d'un dispositif de distribution automatique d'eau selon un autre mode de réalisation de l'invention.

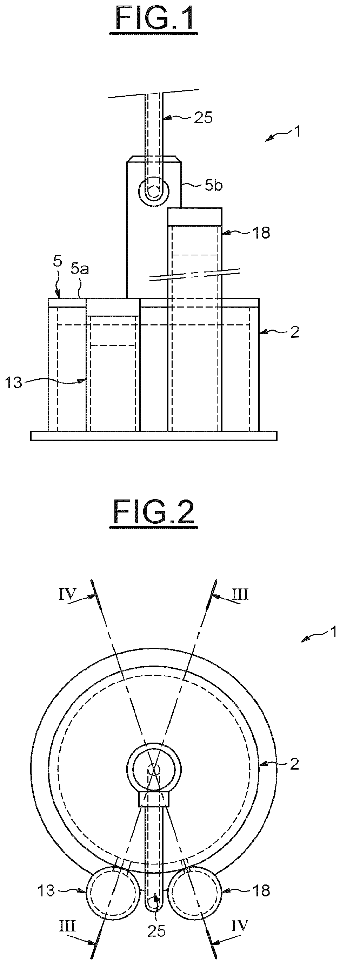

Les figures 1 à 5 illustrent un dispositif de distribution automatique d'eau 1 pour jardinières et pots de fleurs.

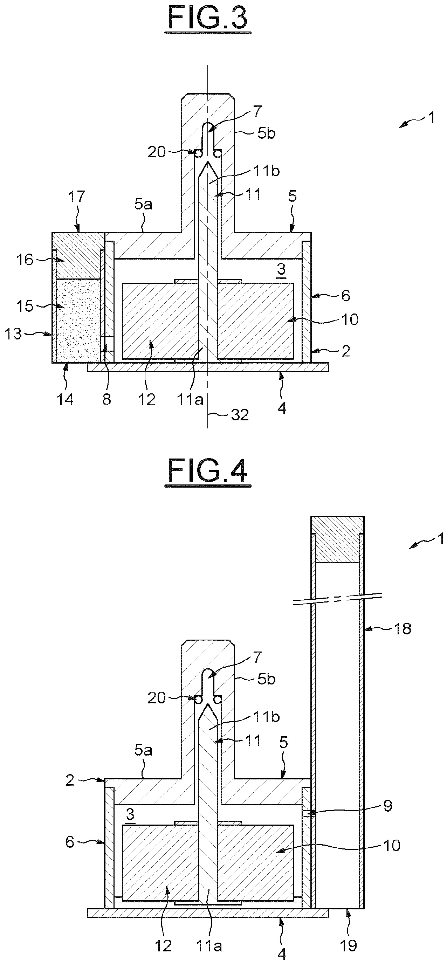

Le dispositif de distribution d'eau 1 comprend un corps principal 2 comportant une cavité 3. On peut voir sur les figures 3 à 5 que la cavité 3 est délimitée par un fond 4, une paroi supérieure 5 et au moins une paroi latérale 6.

Dans l'exemple illustré, le corps principal 2 est de forme cylindrique, et comporte une unique paroi latérale 6. Toutefois, on pourra prévoir que le corps principal présente une forme différente et plusieurs parois latérales.

On pourra par exemple prévoir que le corps principal 2 soit formé d'une première partie comportant la paroi supérieure 5 et d'une deuxième partie comprenant le fond 4 et la paroi latérale 6, fixée sur la première partie.

La paroi supérieure 5 illustrée comprend une portion plane 5a et une portion tubulaire 5b.

Une arrivée d'eau 7 est ménagée dans la paroi supérieure 5 du corps principal 2 permettant l'admission d'eau dans la cavité 3. De préférence, l'arrivée d'eau 7 est formée dans la portion tubulaire 5b de la paroi supérieure 5.

De plus, un orifice d'évacuation d'eau 8 et un orifice d'évacuation d'air 9 sont ménagés dans le corps principal 2.

L'orifice d'évacuation d'eau 8 est disposé sur la paroi latérale 6 du corps principal 2 et permet l'évacuation de l'eau présente dans la cavité 3 vers l'extérieur.

L'orifice d'évacuation d'air 9 est préférentiellement disposé sur la paroi latérale 6 et permet l'évacuation de l'air présent dans la cavité 3 vers l'extérieur, notamment lorsque la cavité 3 se remplit d'eau.

En outre, le dispositif de distribution d'eau 1 comporte un élément mobile 10 apte à se déplacer sous l'action de l'eau qui est admise dans la cavité 3. L'élément mobile 10 ou élément flottant est apte à flotter en présence d'eau.

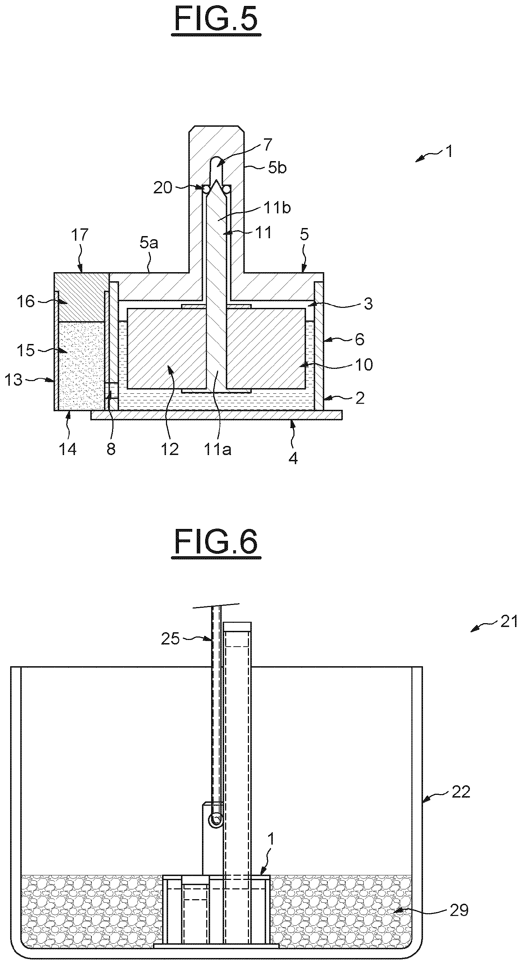

En particulier, l'élément mobile 10 est apte à se déplacer d'une première position dans laquelle l'arrivée d'eau 7 est dégagée pour l'admission d'eau dans la cavité 3 vers une deuxième position dans laquelle l'élément mobile 10 obture l'arrivée d'eau 7. Les première et deuxième positions sont respectivement illustrées aux figures 3 et 5.

Lorsque l'élément mobile 10 est dans la première position, l'élément mobile 10 peut, comme cela est illustré à la figure 3, reposer sur le fond 4 du corps principal 2.

Avantageusement, le dispositif de distribution d'eau 1 comprend en outre des moyens de guidage de l'élément mobile 10 entre les première et deuxième positions.

A cet égard, dans l'exemple illustré, l'élément mobile 10 comporte une portion allongée 11 et une portion cylindrique 12 aptes à flotter en présence d'eau.

La portion allongée 11 comprend une première extrémité 11a disposée en regard du fond 4 du corps principal 2 et une deuxième extrémité 11b configurée pour s'insérer dans la portion tubulaire 5b de la paroi supérieure 5 du corps principal 2.

La configuration avantageuse de la deuxième extrémité 11b de la portion allongée 11 de l'élément mobile 10 et de la portion tubulaire 5b de la paroi supérieure 5 du corps principal 2 permet de guider le déplacement de l'élément mobile 10 entre les première et deuxième positions dans le corps principal 2.

Dans l'exemple illustré, l'élément mobile 10 est apte à se déplacer sous l'action de l'eau entre les première et deuxième positions par translation rectiligne le long d'un axe de déplacement 32, qui dans cet exemple coïncide avec l'axe longitudinal du corps principal 2.

Dans l'exemple illustré, l'arrivée d'eau 7 est positionnée sur l'axe de déplacement 32 de l'élément mobile 10. De cette façon, l'élément mobile 10 est apte à obturer directement l'arrivée d'eau 7 par un simple mouvement de translation rectiligne le long de l'axe de déplacement 32 vers la deuxième position.

Le passage entre les première et deuxième positions est ainsi obtenu à partir d'une structure simple requérant un nombre limité de pièces et facile à fabriquer. De plus, la position de l'arrivée d'eau 7 sur l'axe de déplacement 32 de l'élément mobile 10 permet d'obtenir un dispositif de distribution d'eau 1 peu encombrant, de faible largeur, et facilement intégrable dans un pot de fleurs ou une jardinière.

Dans une telle configuration, l'obturation et la libération de l'arrivée d'eau 7 sont réalisées par l'élément mobile 10 flottant lui-même qui se déplace en translation rectiligne, évitant tout risque de bascule de l'élément mobile 10 lors de son déplacement.

Afin d'isoler l'orifice d'évacuation d'eau 8 et empêcher la terre présente dans le pot ou la jardinière de pénétrer dans le dispositif de distribution d'eau 1, le dispositif de distribution d'eau 1 peut comprendre un corps secondaire 13.

Le corps secondaire 13 est avantageusement en communication fluidique avec le corps principal 2 par l'intermédiaire de l'orifice d'évacuation d'eau 8 du corps principal 2 et comporte une ouverture 14 débouchant sur l'extérieur pour l'évacuation de l'eau à l'extérieur du dispositif de distribution d'eau 1.

Dans l'exemple illustré à la figure 3, le corps secondaire 13 est fixé au corps principal 2 et s'étend selon un axe parallèle à l'axe longitudinal du corps principal 2.

L'ouverture 14 est avantageusement configurée pour être disposée en regard du fond du pot ou de la jardinière lorsque le dispositif de distribution d'eau 1 est disposé dans le pot ou la jardinière. De cette façon, l'ouverture 14 assure l'évacuation de l'eau vers l'extérieur tout en empêchant la terre de pénétrer dans le dispositif de distribution d'eau 1.

Toutefois, afin d'assurer le passage de l'eau provenant de l'ouverture 14 vers l'extérieur, le corps secondaire 13 est préférentiellement configuré de sorte qu'un espace subsiste entre l'ouverture 14 et le fond du pot ou de la jardinière lorsque le dispositif de distribution d'eau 1 est disposé dans le pot ou la jardinière.

A cet égard, dans l'exemple illustré, le fond 4 s'étend au-delà de la paroi latérale 6 du corps principal 2 de sorte que le corps secondaire 13 repose en partie sur le fond 4 laissant subsister un espace entre l'ouverture 14 et le fond du pot ou de la jardinière d'une hauteur égale à la hauteur du fond 4.

De préférence, le corps secondaire 13 comporte également un filtre 15 perméable à l'eau et apte à s'opposer au développement de racines au travers de l'ouverture 14 et l'orifice d'évacuation d'eau 8. Le filtre 15 peut être une mousse ou tout matériau adéquat suffisamment rigide pour s'opposer à la pousse de racines susceptibles de se développer dans l'ouverture 14.

Dans le mode de réalisation illustré, le corps secondaire 13 est tubulaire et les deux extrémités du corps secondaire 13 tubulaire sont ouvertes. Une ouverture 16, opposée à l'ouverture 14 disposée en regard du fond du pot ou de la jardinière, est de préférence obturée de façon réversible par un bouchon 17.

Le filtre 15 peut être disposé dans le corps secondaire 13 et/ou remplacé à l'aide du bouchon 17. De plus, le bouchon 17 empêche la terre de rentrer dans le dispositif de distribution d'eau 1 via le corps secondaire 13.

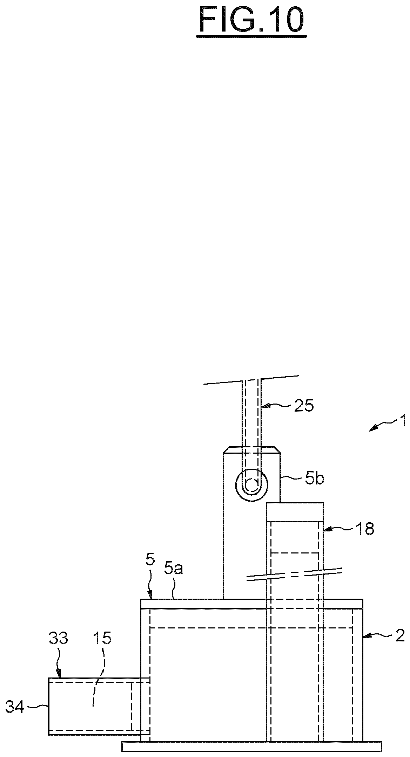

Par ailleurs, la figure 10 illustre un mode de réalisation du dispositif de distribution automatique d'eau pour pots de fleurs et jardinières.

En outre, le dispositif de distribution d'eau 1 peut également comprendre une jauge de niveau d'eau 18, visible à la figure 4, en communication fluidique avec le corps principal 2 par l'intermédiaire de l'orifice d'évacuation d'air 9. L'orifice d'évacuation d'air 9 est avantageusement disposé sur la paroi latérale 6 à une hauteur supérieure par rapport à l'orifice d'évacuation d'eau 8.

La jauge de niveau d'eau 18 comporte avantageusement une ouverture 19 configurée pour être disposée en regard du fond du pot ou de la jardinière lorsque le dispositif de distribution d'eau 1 est disposé dans le pot ou la jardinière.

De plus, la jauge de niveau d'eau 18 est configurée de sorte qu'un espace subsiste entre l'ouverture 19 et le fond du pot ou de la jardinière lorsque le dispositif de distribution d'eau 1 est disposé dans le pot ou la jardinière. De cette façon, l'eau distribuée dans le pot ou la jardinière peut pénétrer dans la jauge de niveau d'eau 18.

Aussi, la hauteur de la jauge de niveau d'eau 18 est avantageusement prévue de manière à ce qu'elle dépasse du pot de fleurs ou de la jardinière et qu'elle soit accessible pour son utilisation. Un accès à l'intérieur de la jauge 18 pour la vérification du niveau d'eau dans le pot ou la jardinière peut se faire par une ouverture disposée à l'opposé de l'ouverture 19. Cette ouverture peut être obturée de façon réversible par un bouchon.

A cet égard, dans l'exemple illustré, le fond 4 s'étend au-delà de la paroi latérale 6 du corps principal 2 de sorte que la jauge de niveau d'eau 18 qui est, par exemple, tubulaire repose en partie sur le fond 4 laissant subsister un espace entre l'ouverture 19 et le fond du pot ou de la jardinière d'une hauteur égale à la hauteur du fond 4.

Le corps secondaire 13 et la jauge de niveau d'eau 18 illustrés sont des pièces fabriquées indépendamment du corps principal 2 puis fixées sur ce dernier.

Selon une alternative, on pourra prévoir que le corps secondaire 13, la jauge de niveau d'eau 18 et au moins une partie du corps principal 2 forment une structure monobloc.

Selon une alternative, et en référence à la figure 10, le dispositif de distribution d'eau 1 peut comprendre un corps secondaire 33 formé directement sur le corps principal 2.

Le corps secondaire 33 et la paroi latérale 6 du corps principal 2 peuvent être, avantageusement, monoblocs et le corps secondaire 33 s'étend à partir du corps principal 2.

Dans l'exemple illustré à la figure 10, le corps secondaire 33 est cylindrique et s'étend perpendiculairement à la paroi latérale 6 du corps principal 2.

De plus, le corps secondaire 33 est en communication fluidique avec la cavité 3 du corps principal 2 par l'intermédiaire de l'orifice d'évacuation d'eau 8 et débouche sur l'extérieur par une ouverture 34 permettant l'évacuation de l'eau à l'extérieur du dispositif de distribution d'eau 1. Dans cet exemple, le diamètre de l'orifice d'évacuation 8 est de préférence identique au diamètre du corps secondaire 33.

Le corps secondaire 33 empêche la terre présente dans le pot ou la jardinière de pénétrer dans le dispositif de distribution d'eau 1.

De préférence, le corps secondaire 33 comporte également un filtre 15 perméable à l'eau et apte à s'opposer au développement de racines au travers de l'ouverture 34 et de l'orifice d'évacuation d'eau 8. Le filtre 15 peut être en mousse ou tout autre matériau adéquat suffisamment rigide pour s'opposer à la pousse de racines susceptibles de se développer dans l'ouverture 34.

De préférence, le dispositif de distribution automatique d'eau 1 est fabriqué en matière plastique ou tout autre matériau adapté au contact de l'eau.

De plus, le corps principal 2 peut comporter un joint 20, par exemple un joint torique, disposé entre l'élément mobile 10 et l'arrivée d'eau 7 de manière à optimiser l'obturation de l'arrivée d'eau 7 par l'élément mobile 10 lorsque l'élément mobile 10 est dans la deuxième position.

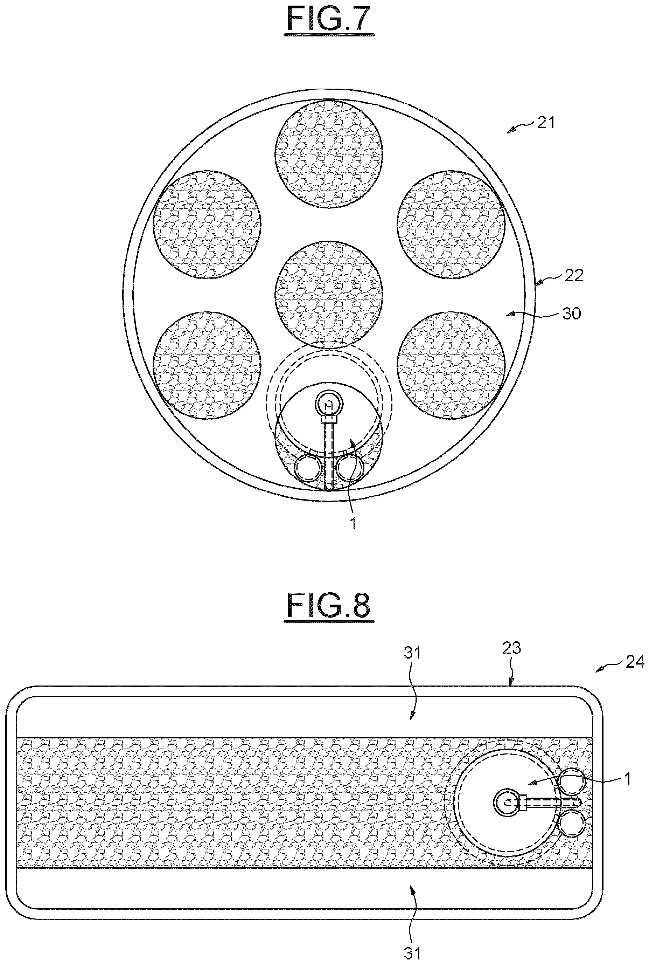

Les figures 6 et 7 illustrent un système de distribution automatique d'eau 21 comprenant un pot de fleurs 22 dans lequel est disposé un dispositif de distribution automatique d'eau 1.

Selon une alternative, le dispositif de distribution automatique d'eau 1 peut être disposé dans une jardinière 23 comme tel est le cas dans le système de distribution automatique d'eau 24 représenté à la figure 8.

Bien entendu, on pourra prévoir que le pot de fleurs ou la jardinière comprenne une pluralité de dispositif de distribution automatique d'eau 1 afin d'adapter la quantité d'eau à distribuer à la taille du pot de fleur ou de la jardinière.

Les systèmes de distribution d'eau 21 et 24 comprennent un réservoir d'eau, non représenté sur les figures 6 à 8, relié au dispositif de distribution automatique d'eau 1 par un conduit d'alimentation 25 pour l'alimentation en eau de l'arrivée d'eau 7.

A la figure 3, l'élément mobile 10 est dans une première position, reposant sur le fond 4 du corps principal 2 et la portion allongée 11 de l'élément mobile 10 n'obturant pas l'arrivée d'eau 7.

Lorsque l'arrivée d'eau 7 est alimentée en eau, de préférence en étant raccordée à un réservoir d'eau, l'eau s'écoule dans la cavité 3 et remplit cette dernière, soulevant progressivement l'élément mobile 10 qui flotte à la surface de l'eau.

Lorsque le niveau d'eau atteint l'orifice d'évacuation d'eau 8, l'eau peut s'écouler vers l'extérieur du corps principal 2. Dans l'exemple illustré, l'eau traverse dans une étape intermédiaire le filtre 15 du corps secondaire 13 et est évacuée par l'ouverture 14 du corps secondaire 13 pour s'écouler dans le pot de fleurs ou la jardinière. La quantité d'eau distribuée par le dispositif de distribution automatique d'eau 1 au fond du pot de fleurs ou de la jardinière remonte et se disperse par capillarité dans la terre contenue par le pot de fleurs ou la jardinière, qui est ainsi humidifiée.

Les racines de la plante absorbent la quantité d'eau adaptée à leurs besoins en eau.

Lorsque la plante n'a plus besoin d'eau et n'absorbe plus d'eau, l'eau contenue dans la cavité 3 stagne à un niveau supérieur à l'orifice d'évacuation d'eau 8, comme cela est visible à la figure 5. L'élément mobile 10 est dans une deuxième position dans laquelle sa portion allongée 11 obture l'arrivée d'eau 7.

Lorsque la plante requiert de nouveau de l'eau et que ses racines absorbent l'eau présente dans le pot de fleurs ou la jardinière, le niveau d'eau dans la cavité 3 diminue et l'élément mobile se déplace vers la première position, dégageant l'arrivée d'eau 7 qui fournit à nouveau de l'eau.

L'alimentation en eau de la plante se fait ainsi de manière autonome et adaptée aux besoins en eau de la plante.

On pourra prévoir que le système de distribution automatique d'eau 21, 24 comprenne une pluralité de pot de fleurs et/ou de jardinières, les pots de fleurs et/ou jardinières comprenant chacun un ou plusieurs dispositifs de distribution automatique d'eau 1. Dans une telle configuration, le conduit d'alimentation 25 relie avantageusement le réservoir à la pluralité de dispositif de distribution automatique d'eau 1.

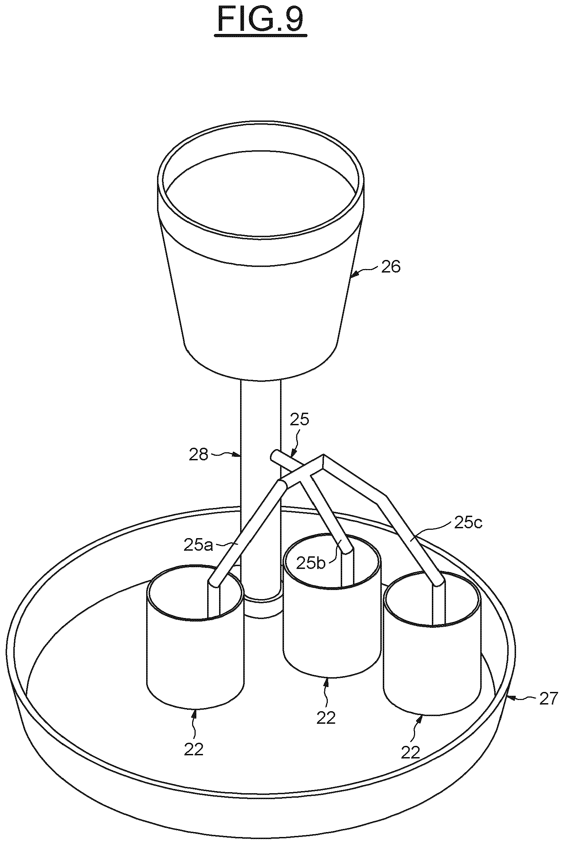

Selon un mode de réalisation supplémentaire illustré à la figure 9, le système de distribution automatique d'eau 21 peut comprendre une pluralité de pots de fleurs 22, par exemple trois pots de fleurs 22, comprenant chacun un dispositif de distribution d'eau 1. Les trois dispositifs de distribution d'eau 1 sont reliés à un réservoir d'eau 26 par le conduit d'alimentation 25 comportant trois branches 25a, 25b et 25c alimentant chacune un pot de fleurs 22.

Le réservoir d'eau 26 peut être posé sur, et de préférence fixé à, un réceptacle 27, par exemple une coupelle, sur lequel est avantageusement disposée la pluralité de pots de fleurs ou jardinières. Le réservoir d'eau 26 est disposé sur le réceptacle 27 à une hauteur supérieure par rapport aux dispositifs de distribution d'eau 1 par l'intermédiaire d'un pied 28 de sorte que l'eau contenue dans le réservoir d'eau 26 puisse s'écouler vers les dispositifs de distribution d'eau 1 tel un château d'eau.

De préférence, le système de distribution automatique d'eau 21 comprend des billes d'argiles 29 disposées au fond du pot de fleurs, comme cela est illustré à la figure 6, ou au fond de la jardinière, afin de limiter la rétention d'eau au fond du pot de fleurs ou de la jardinière.

Par ailleurs, le système de distribution automatique d'eau 21, 24 peut comprendre des moyens de limitation de l'évaporation de l'eau distribuée par le dispositif de distribution d'eau dans le pot ou la jardinière, dont le matériau peut être, avantageusement, imperméable à l'eau.

A la figure 7, on peut voir que les moyens de limitation de l'évaporation de l'eau peuvent, par exemple, se présenter sous la forme d'une plaque perforée 30, par exemple un disque perforé adapté à la forme du pot de fleurs 22.

Comme illustré à la figure 8, les moyens de limitation de l'évaporation de l'eau peuvent, par exemple, également se présenter sous la forme de bandes 31, forme particulièrement adaptée pour une jardinière.

Les moyens de limitation 30, 31 de l'évaporation d'eau permettent de limiter les pertes d'eau par évaporation à la surface du pot de fleurs 22 ou de la jardinière 23 et permet ainsi d'économiser de l'eau.

Les moyens de limitation 30, 31 de l'évaporation d'eau peuvent être disposés sur des billes d'argile 29 ou sur la terre contenue dans le pot de fleurs ou la jardinière.

La surface des moyens de limitation de l'évaporation de l'eau choisis pourra être adaptée à la capacité de limitation de l'évaporation de l'eau souhaitée.

## Revendications

1. Dispositif de distribution automatique d'eau pour pots de fleurs et jardinières, comprenant :
un corps principal (2) comportant une cavité (3) délimitée par un fond (4), une paroi supérieure (5) et au moins une paroi latérale (6) ;
une arrivée d'eau (7) ménagée dans la paroi supérieure (5) du corps principal (2) pour l'admission d'eau dans la cavité (3) ;
un orifice d'évacuation d'eau (8) ménagé dans la paroi latérale (6) du corps principal (2) pour l'évacuation de l'eau de la cavité (3) vers l'extérieur du corps principal (2) ;
un orifice d'évacuation d'air (9) ménagé dans le corps principal (2) pour l'évacuation d'air vers l'extérieur de la cavité (3) ; et
un élément mobile (10) apte à se déplacer, sous l'action de l'eau admise dans la cavité (3), d'une première position dans laquelle l'arrivée d'eau (7) est dégagée pour l'admission d'eau dans la cavité (3) vers une deuxième position dans laquelle l'élément mobile (10) apte à flotter en présence d'eau obture l'arrivée d'eau (7).

2. Dispositif selon la revendication 1, **caractérisé en ce que** l'élément mobile (10) est apte à se déplacer entre les première et deuxième positions par translation rectiligne le long d'un axe de déplacement (32), l'arrivée d'eau (7) étant positionnée sur ledit axe de déplacement (32).

3. Dispositif selon la revendication 1 ou 2, **caractérisé en ce que** le corps principal (2) comprend des moyens de guidage (11b, 5b) de l'élément mobile (10) entre les première et deuxième positions.

4. Dispositif selon l'une quelconque des revendications précédentes, **caractérisé en ce qu'**il comprend un corps secondaire (13 ; 33) en communication fluidique avec le corps principal (2) par l'intermédiaire de l'orifice d'évacuation d'eau (8) du corps principal (2), le corps secondaire (13) comportant en outre une ouverture (14) pour le passage de l'eau vers l'extérieur et un filtre (15) perméable à l'eau et apte à s'opposer au développement de racines au travers de ladite ouverture (14).

5. Dispositif selon l'une quelconque des revendications précédentes, **caractérisé en ce qu'**il comprend une jauge de niveau d'eau (18) en communication fluidique avec le corps principal (2) par l'intermédiaire de l'orifice d'évacuation d'air (9).

6. Dispositif selon l'une quelconque des revendications précédentes, **caractérisé en ce que** le corps principal (2) comprend un joint (20) disposé entre l'élément mobile (10) et l'arrivée d'eau (7).

7. Système de distribution automatique d'eau comprenant :
au moins un pot de fleurs (22) ou une jardinière (23) ;
un dispositif de distribution d'eau (1) selon l'une quelconque des revendications 1 à 6 disposé dans le pot de fleurs (21) ou la jardinière (24) ;
un réservoir d'eau (26) ; et
un conduit d'alimentation (25) reliant le réservoir d'eau (26) à l'arrivée d'eau (7) du dispositif de distribution d'eau (1).

8. Système selon la revendication 7, **caractérisé en ce qu'**il comprend une pluralité de pot de fleurs (22) et/ou de jardinière (23) comprenant chacun un dispositif de distribution automatique d'eau (1) selon l'une quelconque des revendications 1 à 5, le conduit d'alimentation reliant le réservoir d'eau (26) à chacun desdits dispositifs de distribution d'eau (1).

9. Système selon la revendication 7 ou 8, **caractérisé en ce que** le réservoir d'eau (26) est fixé à un réceptacle (27) apte à recevoir les pots de fleurs (22) et/ou jardinières (23), le réservoir d'eau (26) étant disposé à une hauteur supérieure par rapport aux dispositifs de distribution d'eau (1).

10. Système selon l'une quelconque des revendications 7 à 9, **caractérisé en ce qu'**il comprend des moyens de limitation (30 ; 31) de l'évaporation de l'eau distribuée par le dispositif de distribution d'eau (1) dans le pot (22) ou la jardinière (23).

11. Système selon la revendication 10, **caractérisé en ce que** les moyens de limitation (30) de l'évaporation de l'eau comprennent une plaque perforée.
